# EUROPEAN PATENT APPLICATION

(11) **EP 1 872 669 A1**
(43) Date of publication of application: **02.01.2008**
(21) Application number: 05739315.9
(22) Date of filing: 11.05.2005
(51) Int. Cl.: A23L 2/52

(54) **OXYGEN-CONTAINING REDUCTIVE AQUEOUS BEVERAGE AND PROCESS FOR PRODUCTION OF THE SAME**

(30) Priority: 28.03.2005 JP 2005092554
(71) Applicant: Murota, Wataru, Kahoku-gun, Ishikawa 929-0324 (JP)
(72) Inventor: Murota, Wataru, Kahoku-gun, Ishikawa 929-0324 (JP)
(74) Representative: Chapple, Colin Richard
(86) International application number: PCT/JP2005/008643
(87) International publication number: WO 2006/103789

(57) **Abstract**

An oxygen-containing reductive aqueous beverage produced by dissolving oxygen in an aqueous beverage (for example, water, mineral water, tea, coffee, juice, etc.) under a pressure of 1 to 1000 atm and then dissolving hydrogen therein under a pressure of 1 to 1000 atm using a well-known gas-liquid contactor. The beverage is rich in both oxygen and hydrogen and has an extremely low oxidation-reduction potential. The beverage can be used on a day-to-day basis as a reductive aqueous beverage without causing any health problems.

## Description

### TECHNICAL FIELD

This invention relates to an oxygen-containing reducing aqueous beverage which exhibits high reducing activity notwithstanding its substantial oxygen content and to a method of producing the same.

### BACKGROUND ART

The production of water with low oxidation-reduction potential by electrolysis has been disclosed in Japanese Laid Open Patent Publication No. 2001-145880 (paragraphs [0043]-[0049]), Japanese Laid Open Patent Publication No. 2001-137852 (paragraphs [0041]-[0042], [0045]-[0053]) and Japanese Laid Open Patent Publication No. 2002-254078 (refer to the scope of claims, paragraphs [0072]-[0073], [0077]-[0086]) while the production of water with low oxidation-reduction potential by dissolution of pressurized hydrogen has been disclosed in Japanese Laid Open Patent Publication No. 2004-230370 (refer to the scope of claims). Therefore, it has been supposed that the production of reducing aqueous beverages low in oxidation-reduction potential can be accomplished only by dissolving the hydrogen content of aqueous beverages such as water, mineral water, tea, coffee and juice beverages under pressure.

Such reducing aqueous beverages formulated in accordance with such production method known in the art substantially do not contain oxygen, which is required by the human body. In this connection, a species of reducing water prepared by dissolving its hydrogen content under pressure was found to have an oxygen content only of 0.04 mg/liter (as measured using a Toa DKK's dissolved oxygen concentration meter). This is natural, because the original oxygen content of aqueous beverages is expelled due to hydrogen, hence only reducing aqueous beverages with low oxygen content could be obtained.

Thus, to produce reducing aqueous beverages with a high degree of oxygen concentration such as water, mineral water, tea, coffee and juice beverages, employing the technique of simply dissolving the hydrogen content of such beverages to increase their reducing power is ineffective. In particular, when gaseous hydrogen is bubbled into aqueous beverages, the partial pressure of hydrogen gas does not permit other gases, such as oxygen, to coexist. In other words, the removal of hydrogen gas in aqueous beverages also leads to the complete removal of other gases such as oxygen, which is essential to human beings.

In cases where aqueous beverages low in oxidation-reduction potential are prepared by electrolysis, the aqueous beverages obtained were known to possess the characteristic of alkalinity derived only from the OH⁻ ion and did not contain hydrogen gas other than that of the saturated concentration. Since OH- ions exhibit reducing power under alkaline conditions, the oxidation-reduction potential rises when they are neutralized. Thus, their reducing ability is merely delusional. Further, such an alkaline solution may cause health problems when taken in large amounts. In particular, since an alkaline solution adversely affects the kidney, drinking it would be harmful for those suffering from a kidney disease. On the other hand, if taken in optimal doses, it may benefit those with gastric hyperacidity to a certain extent owing to neutralization of the gastric juice caused by the alkaline solution, and not because of the gaseous hydrogen or the reducing power thereof.

Another known method of producing reducing water species involves the incorporation of metallic magnesium in aqueous beverages. In this case, however, magnesium ions are simultaneously formed when gaseous hydrogen is generated, rendering the beverages alkaline. When magnesium ions are incorporated in medicines such as those for constipation, for instance, they produce some positive effect when taken in optimal amounts, but as mentioned above, the excessive taking of alkaline aqueous beverages has a dangerous effect because they inhibit the bodily function of maintenance for keeping the body in a constantly neutral state. Mere dissolution of gaseous hydrogen may be considered rather preferable, since it does not render the beverage alkaline.

### DISCLOSURE OF THE INVENTION

Accordingly, the inventor of the present invention conducted various experiments in an attempt to obtain oxygen-containing reducing aqueous beverages with a considerable degree of hydrogen concentration and very low oxidation-reduction potential notwithstanding the fair amount of oxygen they contain, and as a result, discovered that when such oxygen or hydrogen is caused to be contained under pressure and thereafter hydrogen or oxygen is caused to be contained therein or when both oxygen and hydrogen are simultaneously contained, reducing aqueous beverages with a considerable degree of hydrogen concentration and very low oxidation-reduction potential can be obtained.

Since oxygen and hydrogen do not react with each other at room temperature, they naturally do not react with each other within the human body. Taking this into account, it would reasonable to expect that aqueous beverages containing abundant amounts of both oxygen and hydrogen may be formulated.

Therefore, it is the object of the invention to first provide reducing aqueous beverages with a considerable degree of hydrogen concentration and very low oxidation-reduction potential notwithstanding the fair amount of oxygen they contain by causing oxygen and hydrogen to be simultaneously contained therein, and the second object of the invention is to provide a method of producing such reducing aqueous beverages.

To accomplish the above-mentioned objectives, the first embodiment of the invention provides for an oxygen-containing reducing aqueous beverage characterized in that (1) it contains not less than 0.1 mg/liter of oxygen and has a hydrogen concentration not lower than 0.1 ppm; (2) in which pH preferably ranges from 3 to 11; and (3) its oxidation-reduction potential is preferably not higher than -50 mV

Further, in this embodiment, the reducing aqueous beverage possessing any of the three abovementioned characteristics is preferably any one of the following: water, mineral water, and tea, coffee or juice beverage.

In the second embodiment of the invention, a method for producing one such oxygen-containing reducing aqueous beverage is provided for, and is characterized in the following steps: (1) pressurizing and dissolving its oxygen content at 1-1000 atmospheres, (2) pressurizing and dissolving the hydrogen content of the resulting aqueous beverage at 1-1000 atmospheres either under pressure or after reverting to normal pressure, and thereafter (3) reverting to normal pressure to produce the desired aqueous beverage.

In the third embodiment of the invention, a method for producing one such oxygen-containing reducing aqueous beverage is provided for, and is characterized in the following steps: (1) pressurizing and dissolving its hydrogen content at 1-1000 atmospheres, (2) pressurizing and dissolving the oxygen content of the resulting aqueous beverage at 1-1000 atmospheres either under pressure or after reverting to normal pressure, and thereafter (3) reverting to normal pressure to produce the desired aqueous beverage.

Further in the fourth embodiment of the invention, a method for producing such oxygen-containing reducing aqueous beverages is provided for, and is characterized in the following steps: (1) pressurizing and dissolving their respective oxygen and hydrogen contents simultaneously at 1-1000 atmospheres, and thereafter (2) reverting to normal pressure to produce the desired aqueous beverages.

While the reducing aqueous beverages produced in the prior art by simply causing their hydrogen content to be absorbed have negligible oxygen content, and thus cannot provide that amount of oxygen required by the body, the present invention aims to provide oxygen-containing reducing aqueous beverages having seemingly conflicting properties, namely, sufficient oxygen content required by the human body and an extremely low oxidation-reduction potential due to the presence of hydrogen, which is capable of permeating cellular membranes, as described in detail in the following examples.

### BEST MODES FOR CARRYING OUT THE INVENTION

Certain specific modes of embodiment of the invention will be hereafter described in detail by citing examples. These examples are not however intended to restrict the scope of the invention, as various modifications, which fall within the scope of claims of the invention, can be made without deviating from the technical idea of the invention.

### EXAMPLE 1

In this example, with the use of a publicly known gas-liquid contactor, the oxygen content of 1 liter of a commercial mineral water product (with pH = 7.4, sold under the trademark "Konkon Yusui" of Nestlé Japan,) was pressurized at 6 atmospheres and dissolved at the rate of 200 ml/minute for 10 minutes, and the hydrogen content of the oxygenated water (of 1 liter) was pressurized at 6 atmospheres and dissolved at the rate of 200 ml/minute for 10 minutes.

Using an OPR meter, oxygen content meter, hydrogen concentration meter and pH meter (all being products of Toa DKK Corp.) as measuring devices, an ideal grade of water with a hydrogen concentration of 0.96 ppm, pH of 7.4 and an oxidation-reduction potential of -650 mV, together with an oxygen content of 3.20 mg/liter, was obtained at room temperature as the reducing water of Example 1. The results obtained are summarized in Table 1.

**Table 1**

| | Oxidation-reduction Potential | Oxygen Content | Hydrogen Concentration |
|---|---|---|---|
| Commercial grade water | +320 mv | 0.48 mg/liter | 0.00 ppm |
| Oxygenated water | +355 mv | 54.32 mg/liter | 0.00 ppm |
| Oxygenated and hydrogenated water | -650 mv | 3.20 mg/liter | 0.96 ppm |

### EXAMPLE 2

In Example 2, a commercial Japanese tea beverage product with an oxidation-reduction potential of +60 mV, a dissolved oxygen content of 1.55 mg/liter and pH of 6.1, was pressurized at 8 atmospheres at the rate of 500 ml/minute while simultaneously feeding the tea to the ejector and the oxygen gas was pressurized and dissolved at 8 atmospheres at the rate of 150 ml/minute. After reverting to normal pressure, the oxygen-containing tea beverage yielded a dissolved oxygen content of 31.00 mg/liter.

The hydrogen gas of this oxygen-containing tea beverage pressurized at 8 atmospheres at the rate of 500 ml/minute was pressurized at 8 atmospheres at the rate of 150 ml/minute, while simultaneously feeding the tea to an ejector. After reverting to normal pressure, the oxygen-containing reducing tea beverage yielded a dissolved oxygen content of 4.50 mg/liter, pH of 6.1 and an oxidation-reduction potential of-599 mV

### EXAMPLE 3

In Example 3, a commercial coffee beverage product with an oxidation-reduction potential of +85 mV, a dissolved oxygen content of 1.22 mg/liter and pH of 5.0, was pressurized at 8 atmospheres at the rate of 150 ml/minute while simultaneously feeding the coffee to an ejector and the oxygen gas was pressurized and dissolved at 8 atmospheres at the rate of 150 ml/minute. After reverting to normal pressure, the oxygen-containing reducing coffee beverage yielded a dissolved oxygen content of 32.70 mg/liter.

The hydrogen gas of this oxygen-containing tea beverage pressurized at 8 atmospheres at the rate of 500 ml/minute was pressurized at 8 atmospheres at the rate of 150 ml/minute, while simultaneously feeding the coffee to an ejector. After reverting to normal pressure, the oxygen-containing reducing coffee beverage yielded a pH of 5.0, dissolved oxygen content of 6.51 mg/liter, and an oxidation-reduction potential of -428 mV.

In the three examples described above, although the oxygen content of each aqueous beverage was first dissolved, following which the hydrogen content thereof was dissolved, it is also possible to reverse the process, namely, by first causing the dissolution of hydrogen gas and then the dissolution of oxygen gas. It is further possible to produce the same effects by providing the aqueous beverages simultaneously with gaseous oxygen and gaseous hydrogen. When this method is employed, however, particular care should be taken since a mixture of oxygen gas and hydrogen gas is instantly inflammable and an explosion can occur due to electrostatic discharge or the like.

## Claims

1. An oxygen-containing reducing aqueous beverage which contains at least 0.1 mg/liter of oxygen and has a hydrogen concentration not lower than 0.1 ppm.

2. An oxygen-containing reducing aqueous beverage according to Claim 1 with pH ranging from 3 to 11.

3. An oxygen-containing reducing aqueous beverage according to Claim 1 with an oxidation-reduction potential not higher than -50 mV

4. An oxygen-containing reducing aqueous beverage according to any of Claims 1, 2 or 3 comprising any one of water, mineral water, tea, coffee or juice beverages.

5. A method of producing an oxygen-containing reducing aqueous beverage which comprises the steps of dissolving the oxygen content of an aqueous beverage under pressure of 1-1000 atmospheres, thereafter dissolving the hydrogen content thereof under pressure of 1-1000 atmospheres or after reverting to normal pressure, and reducing the pressure therein to normal pressure to produce the desired aqueous beverage.

6. A method of producing an oxygen-containing reducing aqueous beverage which comprises the steps of dissolving the hydrogen content of an aqueous beverage under pressure of at 1-1000 atmospheres, thereafter dissolving the oxygen content thereof under pressure of 1-1000 atmospheres or after reverting to normal pressure, and reducing the pressure therein to normal pressure to produce the desired aqueous beverage.

7. A method of producing an oxygen-containing reducing aqueous beverage which comprises the steps of dissolving the oxygen content and hydrogen content of an aqueous beverage simultaneously under pressure at 1-1000 atmospheres and reducing the pressure therein to normal pressure to produce the desired aqueous beverage.
